# FASCICULE DE BREVET EUROPEEN

(11) **EP 3 633 185 B1**
(45) Date de publication et mention de la délivrance du brevet: **27.10.2021**
(21) Numéro de dépôt: 19200158.4
(22) Date de dépôt: 27.09.2019
(51) Int. Cl.: F03B 7/00, F03B 17/06

(54) **AUGET DESTINÉ À ÉQUIPER LA ROUE A AUGETS D'UNE MACHINE HYDROLIENNE**
BECHER ZUM AUSSTATTEN EINES WASSERRADS EINER HYDRAULISCHEN MASCHINE
BUCKET INTENDED TO EQUIP A WATER WHEEL OF A HYDROKINETIC MACHINE

(30) Priorité: 05.10.2018 FR 1859244
(43) Date de publication de la demande: 08.04.2020
(73) Titulaire: Rouille, Eugène, 22150 Plouguenast (FR); Rouille, Xavier, 56550 Locoal-Mendon (FR); Rouille, David, 44119 Grandchamps-des-Fontaines (FR)
(72) Inventeur: ROUILLE, Eugène, 22150 PLOUGUENAST (FR); ROUILLE, Xavier, 56550 LOCOAL-MENDON (FR); ROUILLE, David, 49119 GRANDCHAMPS-DES-FONTAINES (FR)
(74) Mandataire: Cabinet Le Guen Maillet

(56) Documents cités:
- EP-A1- 0 940 576
- WO-A1-2013/093585
- FR-A- 387 326
- JP-B1- 4 566 287

## Description

La présente invention se rapporte, notamment, à un auget destiné à entrer dans la construction d'un moulin à eau du type comprenant des augets. Un tel moulin à eau est une machine hydraulique comprenant une roue à augets et qui est destinée à produire de l'énergie à partir d'une chute d'eau.

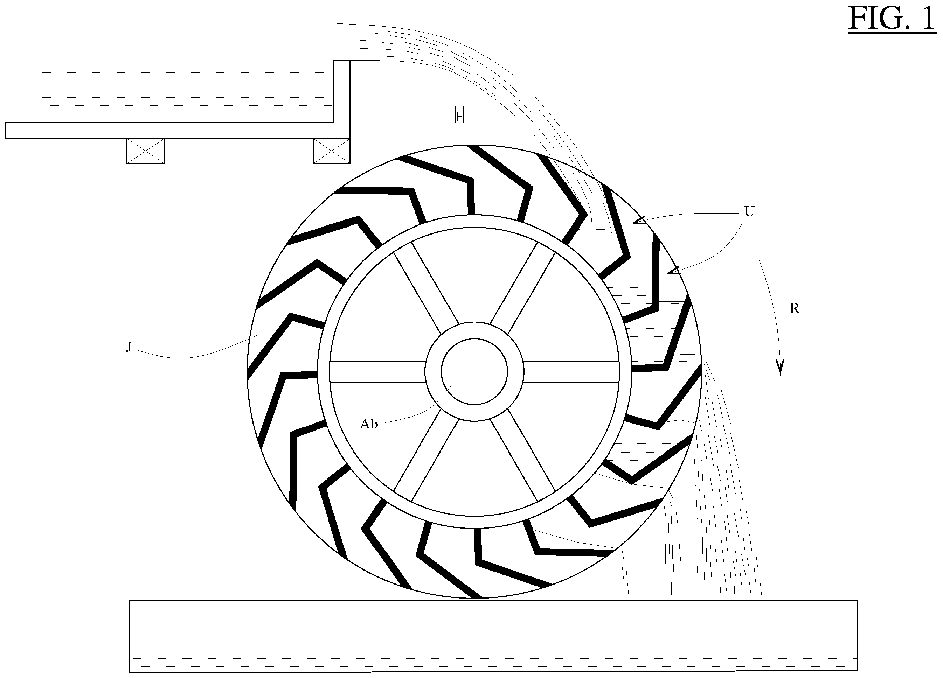

En référence à la Fig. 1, une telle machine hydraulique comprend généralement deux joues J parallèles traversées par un arbre Ab de rotation et entre lesquelles est montée, au niveau de leur périphérie, une pluralité d'augets U répartis régulièrement. L'axe de la roue est disposé horizontalement dans la position de fonctionnement de la machine hydraulique. Chaque auget U comprend une paroi concave fermée à ses deux extrémités et le plus souvent par les deux joues J.

Un flux d'eau provenant F, par exemple d'un bief, alimente la machine hydraulique pour la faire fonctionner, c'est-à-dire pour la faire tourner autour de son axe. Le couple moteur transmis à l'arbre Ab est utilisé pour faire fonctionner un accessoire tel qu'un alternateur. Le sens de rotation de la machine hydraulique est indiqué par la flèche R.

Sur cette Fig. 1, le flux d'eau F est déversé depuis le dessus de la machine hydraulique.

Chaque auget U est positionné de sorte à pouvoir être rempli lors de son passage sous la chute du flux d'eau. Ensuite et au cours de son déplacement autour de l'axe de l'arbre Ab, chaque auget U s'incline, ce qui conduit à ce que son contenu se vidange progressivement par son bord extérieur, dans un cours d'eau situé en contre-bas.

La masse des augets U remplis ou partiellement remplis et dont le centre de gravité est déporté de l'axe de l'arbre Ab, produit un couple moteur qui entraîne à rotation la machine hydraulique. La puissance fournie par la machine est utilisée par l'accessoire.

On connaît encore à la lecture du document EP-A1-0 940 576, une roue hydraulique à turbine destinée à être entraînée en rotation par un écoulement d'eau, disposé au-dessus de la roue, latéralement ou bien encore par l'écoulement de l'eau d'une rivière sous-jacente. La roue hydraulique se compose, d'un arbre d'entraînement d'un générateur, relié par l'intermédiaire de rayons à deux jantes entre lesquelles sont fixées à suivre, des alvéoles. Chaque alvéole comprend une auge pourvue, d'un volet de remplissage disposé à l'extérieur de la roue et d'un volet de vidange par dégazage disposé à l'intérieur de la roue. Les deux volets sont reliés par une tige.

Les deux volets d'une alvéole sont actionnés simultanément à l'ouverture par l'intermédiaire d'un galet, relié au volet de dégazage, pouvant rouler sur deux cames profilées en "accent circonflexe". Les deux cames sont respectivement disposées en haut et en bas de la roue. Lorsque l'alvéole passe au zénith de la roue, le volet de remplissage s'ouvre pour permettre le remplissage de la cellule tout en captant l'énergie cinétique de l'écoulement de l'eau. L'alvéole quitte ensuite la zone d'action de la came et les deux volets sont rappelés vers une position de fermeture par l'intermédiaire d'un ressort.

Quand les deux volets sont fermés, ils touchent l'alvéole précédente. L'alvéole remplie d'eau demeure fermée.

Au point bas de la roue, les deux volets s'ouvrent sous l'effet de l'action de la came et l'alvéole est vidangée rapidement.

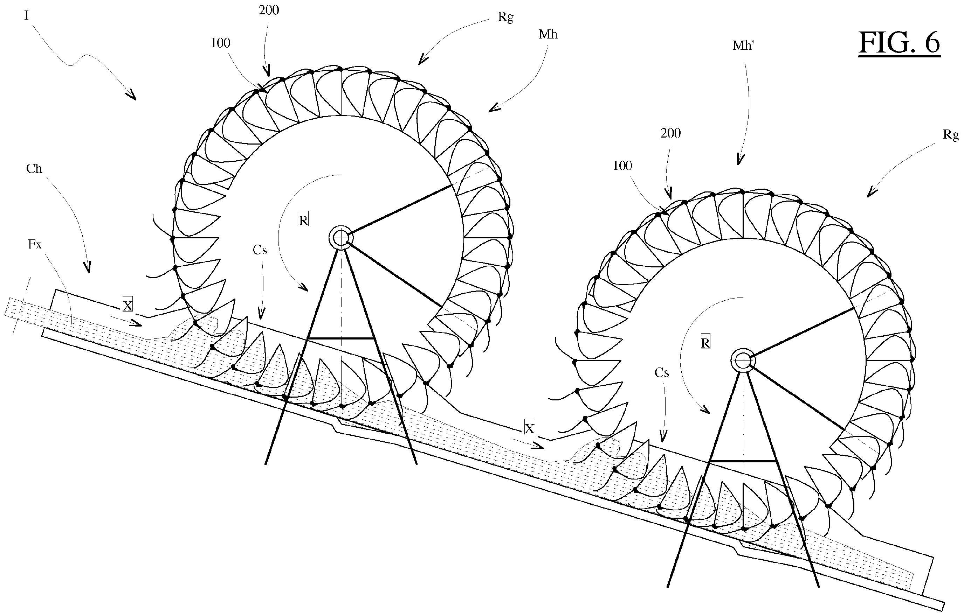

Sur la Fig. 6, le volet de remplissage s'ouvre pour capter l'énergie cinétique de l'écoulement de l'eau de la rivière.

Connaissant cet état de l'art, le demandeur de la présente invention a cherché, notamment, à concevoir des augets perfectionnés, d'une conception simplifiée, pour augmenter l'efficacité d'une telle machine hydraulique qui en serait équipée.

A cet effet, est proposé un ensemble auget, conçu pour équiper la roue à augets d'une machine hydraulique destinée à être utilisée pour faire fonctionner un accessoire, en utilisant l'écoulement gravitaire d'un flux d'eau,
l'auget comprenant une paroi concave formant un contenant destiné à être rempli au moins partiellement par de l'eau pendant le fonctionnement de ladite machine hydraulique, la paroi concave étant délimitée par un bord frontal rectiligne destiné à être tourné vers l'extérieur de la roue à augets,
à chaque auget est associé une aube,
ladite aube comprenant une plaque délimitée par un bord arrière,
ladite aube comprenant une articulation disposée de sorte que le bord arrière puisse être pratiquement jointif avec le bord frontal de l'auget, dans la position d'utilisation de l'ensemble,
ladite aube pouvant, d'une part, être orientée de sorte à pouvoir adopter sous l'effet de la gravité, une position d'ouverture maximum où elle s'expose au flux d'eau et d'autre part, servir à remplir au moins partiellement d'eau ledit auget.

Cet auget associé à une telle aube est en mesure d'accroître l'efficacité de la roue à augets d'une machine hydraulique et qui est équipée d'une pluralité de tels ensembles.

L'aube sert, d'une part, à être impactée par le flux d'eau pour produire une force motrice et, d'autre part, à remplir l'auget auquel elle est associée.

Par ailleurs, l'ensemble auget et aube fonctionne sans l'adjonction d'un quelconque mécanisme de commande.

Selon l'invention, l'auget et/ou l'aube sont pourvus d'une butée conçue pour limiter l'amplitude du mouvement d'articulation de l'aube vis-à-vis de l'auget vers sa position d'ouverture maximum.

L'aube peut ainsi être orientée convenablement et peut également transmettre un effort à l'auget.

Selon une caractéristique additionnelle de l'invention, la plaque présente une géométrie cintrée et dont le cintrage est réalisé dans la même direction que celui de la paroi concave de l'auget, l'aube étant considérée dans sa position d'ouverture maximum.

Le cintrage améliore l'efficacité du travail de l'aube et améliore la vitesse de remplissage de l'auget.

Selon une caractéristique additionnelle de l'invention, le périmètre de l'aube est rectangulaire ou carré.

Cette géométrie procure le meilleur remplissage de l'auget.

Selon une caractéristique additionnelle de l'invention, la plaque cintrée est renforcée par au moins un raidisseur s'opposant à son décintrage.

Le raidisseur maintient la géométrie cintrée de l'aube pendant son fonctionnement.

Selon une caractéristique additionnelle de l'invention, l'aube est définie par un bord avant disposé à l'opposé du bord arrière et ledit bord avant est renforcé par un rebord conçu pour réduire l'usure par frottement dudit bord avant.

La présence de ce rebord réduit l'usure de l'aube pendant son fonctionnement.

Une machine hydraulique destinée à être utilisée pour faire fonctionner un accessoire, en utilisant l'écoulement gravitaire d'un flux d'eau, la machine étant pourvue d'une roue à augets susceptible d'être exposée audit flux d'eau pour la faire tourner, fait partie également de l'invention. La machine hydraulique incorpore une roue à augets incorpore à sa périphérie une pluralité d'ensembles comprenant respectivement un auget et une aube comme décrits ci-avant.

L'efficacité globale de la machine est améliorée comparée aux machines hydrauliques connues équipées de roues à augets.

Selon une caractéristique additionnelle de l'invention, la roue à augets de la machine hydraulique comporte un arbre et elle comprend également deux couronnes ou deux disques disposés parallèlement l'un à l'autre en étant centrés autour de l'axe de l'arbre, les augets étant encadrés latéralement par les deux couronnes ou les deux disques.

Cette construction est relativement simple à mettre en œuvre.

Une installation du type comprenant une telle machine hydraulique fait aussi partie de l'invention. L'installation comprend un coursier destiné à canaliser un écoulement gravitaire d'eau, le coursier s'étendant par en dessous de la roue à augets, le coursier étant positionné de sorte qu'il puisse contenir une pluralité d'augets et d'aubes associées et la géométrie du coursier est dimensionnée pour réceptionner avec un jeu minimum la largeur comprise entre les deux couronnes ou les deux disques, pour limiter un écoulement de l'eau en dehors de la zone de passage de la roue à augets dans ledit coursier.

Le flux d'eau coulant dans le coursier cède une grande partie de son énergie à la machine hydraulique.

Selon une caractéristique additionnelle de l'invention, la géométrie du coursier est définie par une paroi de fond et ladite paroi de fond est renforcée, au moins localement, par l'intermédiaire d'une plaque de frottement conçue pour résister à l'usure par abrasion infligée par le passage répété des aubes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue de face d'un moulin à eau équipé d'une roue à augets et qui est connu,
la Fig. 2 représente une vue en perspective d'un ensemble comprenant, un auget et une aube articulée selon l'invention,
la Fig. 3 représente une vue en perspective d'un ensemble comprenant, un auget et une aube articulée disposés dans une position d'utilisation, l'aube étant orientée dans une position d'ouverture maximum par rapport à l'auget selon l'invention,
la Fig. 4 représente une vue latérale d'un ensemble comprenant, un auget et une aube articulée disposés dans une position d'utilisation, l'aube étant orientée dans une position d'ouverture maximum par rapport à l'auget selon l'invention,
la Fig. 5 représente une vue latérale en coupe d'une installation comprenant, une machine hydraulique, ainsi qu'un chenal d'amenée d'eau dans un coursier de transfert d'énergie vers ladite machine hydraulique selon l'invention et,
la Fig. 6 représente une vue latérale en coupe d'une installation comprenant, deux machines hydrauliques, ainsi qu'un chenal d'amenée d'eau vers deux coursiers de transfert d'énergie vers les deux machines hydrauliques selon l'invention.

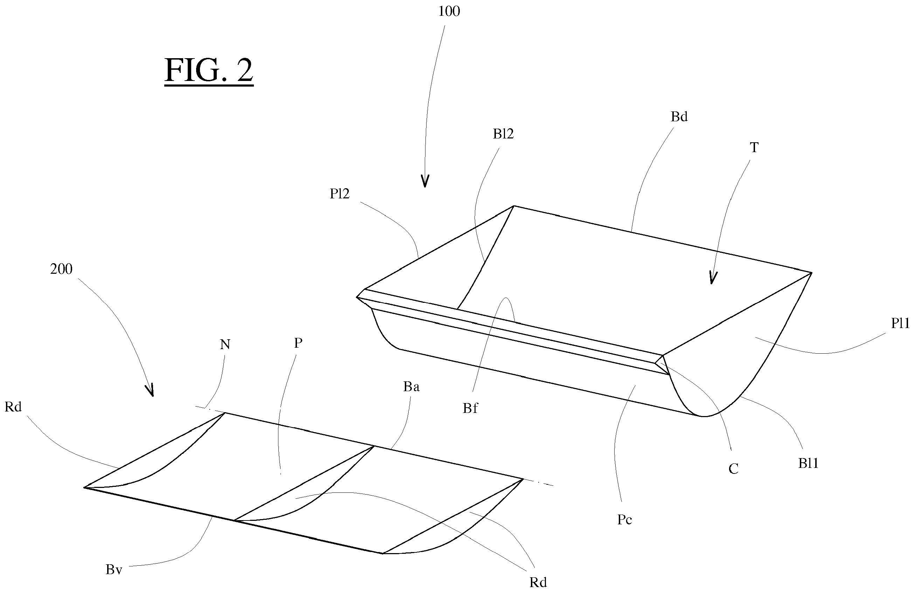

L'auget 100 présenté sur la Fig. 2 est destiné à équiper une machine hydraulique du type comprenant une roue à augets et qui est destinée à produire de l'énergie à partir d'un cours d'eau, tel qu'un bief.

L'auget 100 comprend une paroi concave Pc et deux parois latérales Pl1 et Pl2. La paroi concave Pc est délimitée par un bord frontal Bf, un bord dorsal Bd et qui sont réunis à leurs deux extrémités par l'intermédiaire de deux bords latéraux Bl1 et Bl2. Le bord frontal Bf est rectiligne. Le bord dorsal Bd est préférentiellement disposé parallèlement au bord frontal Bf. Les deux parois latérales Pl1 et P12 épousent les deux bords latéraux Bl pour former avec la paroi concave Pc, un contenant T. Le bord libre de chaque paroi latérale Pl est préférentiellement droit et il rejoint une extrémité du bord frontal Bf avec une extrémité du bord dorsal Bd de l'auget 100. L'ouverture du contenant T est ainsi plane.

La paroi concave Pc possède, sur cette Fig. 2, une géométrie d'une plaque cintrée. L'auget 100 est dans un mode de fabrication avantageux, fabriqué en tôle d'acier. Une plaque cintrée et deux plaques planes rapportées par soudage sur les deux bords latéraux de la plaque cintrée, forment ainsi l'auget 100.

Dans l'invention, l'auget 100 est associé à une aube 200. Celle-ci comprend une plaque P dont le périmètre est délimité notamment par un bord arrière Ba et un bord avant Bv. Le bord arrière Ba est rectiligne. Sa longueur est pratiquement égale à celle du bord frontal Bf de l'auget 100. Le bord avant Bv est de préférence disposé parallèlement au bord arrière Ba.

Sur cette Fig. 2, le périmètre de l'aube 200 est rectangulaire. Il peut encore prendre une géométrie carrée ou prendre une forme de trapèze isocèle avec sa petite base opposée au bord arrière Ba. La plaque P présente préférentiellement une géométrie cintrée, comme cela est montré sur cette Fig. 2. Le cintrage est réalisé dans la même direction que celui de la paroi concave Pc de l'auget 100.

La plaque P cintrée est renforcée par la présence d'au moins un raidisseur Rd s'opposant à son décintrage. Sur cette Fig. 2, trois nervures rejoignent transversalement le bord avant Bv et le bord arrière Ba tout en étant solidaires de la plaque cintrée.

Le bord avant Bv de l'aube 200 est renforcé par un rebord conçu pour réduire l'usure par frottement dudit bord avant. Le rebord peut être fabriqué en métal ou en Téflon ®.

Dans l'invention, l'aube 200 est pourvue d'une articulation N lui permettant un fonctionnement articulé. L'axe de cette articulation N est disposé au voisinage du bord arrière Ba de la plaque P et parallèlement à celui-ci.

Dans l'invention, l'auget 100 est destiné à coopérer avec une aube 200 correspondante, formant ainsi un ensemble de deux constituants.

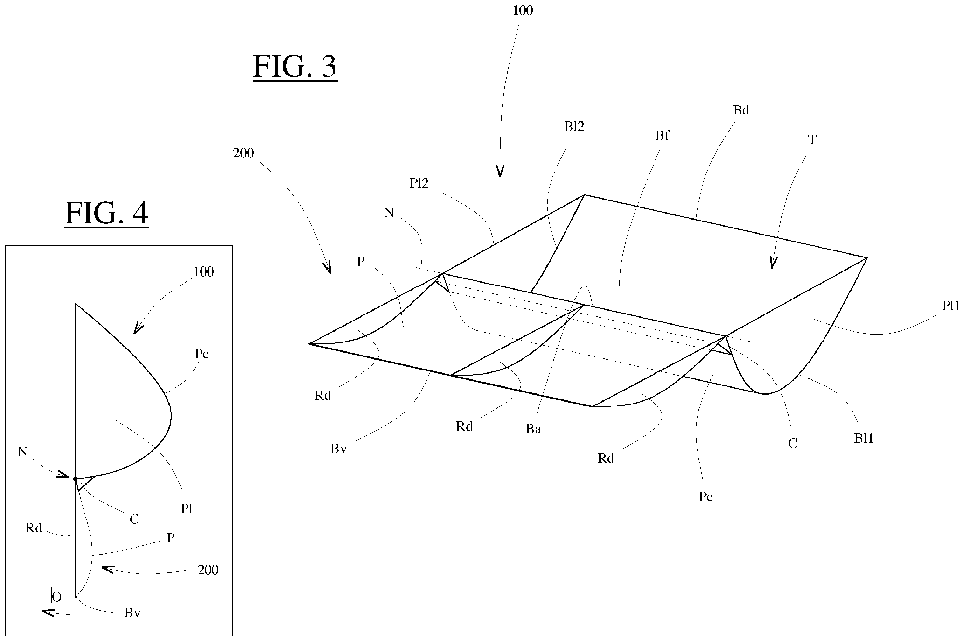

La disposition de l'aube 200 vis-à-vis de l'auget 100, est présentée sur la Fig. 3, l'aube 200 étant orientée dans une position d'ouverture maximum vis-à-vis de l'auget 100.

L'axe de l'articulation N de l'aube 200 est disposé à proximité et le long du bord frontal Bf de l'auget 100. Le bord arrière Ba de l'aube 200 tangente alors pratiquement, au jeu près, le bord frontal Bf de l'auget 100.

Sur la Fig. 4, l'aube 200 est suspendue sous l'auget 100. L'aube 200 peut osciller librement, sous l'effet de la gravité, autour de l'axe de l'articulation N, depuis sa position d'ouverture maximum, vers une position de rabattement comme le suggère la flèche O et qui est expliqué ci-après.

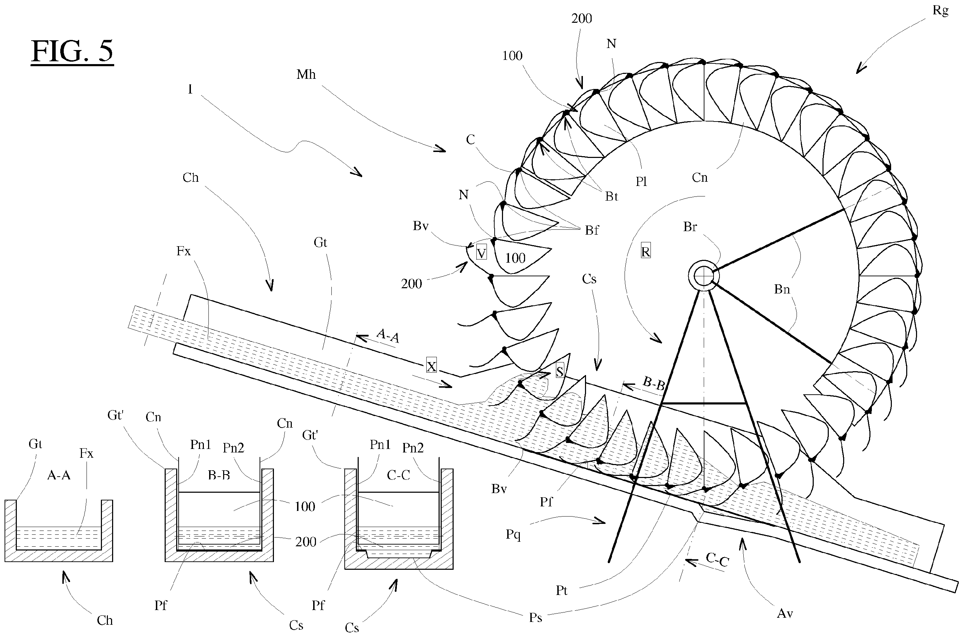

Une installation I comprenant, une machine hydraulique Mh ainsi qu'un chenal Ch d'amenée d'eau vers ladite machine hydraulique, est présentée sur la Fig. 5.

La machine hydraulique Mh est destinée à être utilisée pour faire fonctionner un accessoire, tel qu'une génératrice. Il convient d'installer la machine hydraulique Mh à proximité d'un cours d'eau ou d'une retenue d'eau susceptible de former une chute d'eau capable de délivrer un flux d'eau relativement régulier pour la faire fonctionner. La machine hydraulique Mh comprend, un arbre Br tenu horizontalement dans un portique Pq ancré dans le sol, une pluralité d'augets 100 montés autour de l'arbre Br pour former la roue à augets Rg et qui est destinée à entraîner à rotation ledit arbre, comme le suggère la flèche R. À chaque auget 100 est associée une aube 200.

De manière plus précise, la machine hydraulique Mh comprend, deux couronnes Cn disposées parallèlement l'une à l'autre et qui sont centrées sur l'axe de l'arbre Br. Les deux couronnes Cn sont respectivement reliées à l'arbre Br par l'intermédiaire de barres de liaison Bn. Seule une couronne Cn est visible sur cette vue latérale en coupe. Par ailleurs, la couronne Cn n'est représentée que sur un secteur angulaire et seulement deux barres de liaison Bn sont représentées, pour simplifier la lecture du dessin. Les augets 100 ainsi que leurs aubes 200 respectives sont tenus entre les deux couronnes Cn. Les augets 100 et les aubes 200 sont répartis angulairement autour de l'axe de l'arbre Br. Les lames 200 sont disposées en périphérie de leurs augets 100 respectifs.

Chaque auget 100 est monté en étant orienté convenablement. Préférentiellement, chaque auget 100 est orienté de sorte qu'un plan tangent à son ouverture puisse être sécant avec l'axe de l'arbre Br.

Le bord frontal Bf de chaque auget 100 est ainsi tourné à l'opposé de l'axe de l'arbre Br.

Chaque extrémité de l'axe de l'articulation N de chaque aube 200 est tenue dans un auget 100 et préférentiellement dans chacune de ses deux parois latérales Pl.

Dans un mode de fabrication économique, non représenté, les deux parois latérales Pl des augets 100 sont respectivement constituées par les deux couronnes Cn.

Dans cette logique, l'axe de l'articulation N de chaque aube 200 est tenu entre les deux couronnes Cn.

Dans une variante de réalisation, non représentée, de la machine hydraulique, les deux couronnes ainsi que les barres de liaison sont remplacées par deux disques.

Le chenal Ch est conçu pour, dévoyer un flux d'eau Fx depuis un cours d'eau ou une retenue d'eau, accélérer la vitesse du flux d'eau Fx et finalement l'acheminer vers la machine hydraulique Mh. Il est en principe raccordé en amont au travers d'une vanne de barrage. Il peut être équipé d'une grille à obstacles chargée de retenir des branchages ou divers objets susceptibles de perturber le fonctionnement de la machine hydraulique Mh.

Le chenal Ch se compose d'une gouttière Gt d'écoulement inclinée et dans lequel peut s'écouler, en s'accélérant, un flux d'eau Fx. Le chenal Ch est prolongé par un coursier Cs.

L'écoulement du flux d'eau dans le chenal Ch est indiqué par la flèche X. Une grande partie de l'énergie cinétique accumulée dans ce flux d'eau Fx est transférée, dans le coursier Cs, à la machine hydraulique Mh, par l'intermédiaire de ses augets 100 et de ses aubes 200, pour la faire fonctionner. Le coursier Cs est destiné à être positionné pour passer sous la machine hydraulique Mh.

La gouttière Gt présente en section intérieure, montrée sur la vue en coupe A-A, une géométrie en U ouverte par le dessus et dont la section de passage est préférentiellement rectangulaire ou carrée. Le chenal Ch se raccorde sans discontinuité avec le coursier Cs. La pente intérieure de la gouttière Gt est constante. La pente est descendante en direction de la machine hydraulique Mh.

Le coursier Cs se compose également d'une gouttière Gt' d'écoulement du flux d'eau et qui présente en section intérieure, montrée sur la vue en coupe B-B, une géométrie en U ouverte par le dessus et définie par une paroi de fond Pf préférentiellement droite, bordée de ses deux côtés par deux parois de flanc Pn1 et Pn2 qui sont orientées verticalement et vers le haut. Le coursier Cs passe sous la roue à augets Rg et une partie des augets 100 et de leurs aubes respectives pénètrent dans la gouttière Gt'. La paroi de fond Pf du coursier Cs est renforcée, au moins localement, par l'intermédiaire d'une plaque de frottement Pt conçue pour résister à l'usure par abrasion infligée par le passage répété des aubes 200. Elle est amovible pour pouvoir être remplacée. Elle est fabriquée, par exemple, en métal ou en Téflon ®.

La section de passage de la gouttière Gt' est rectangulaire ou carrée, adaptée pour réceptionner, avec un jeu minimum, la largeur de la partie basse de la roue à augets Rg de la machine et qui est comprise entre ses deux couronnes Cn ou ses deux disques, pour limiter un écoulement de l'eau en dehors de la zone de passage de la roue à augets Rg dans le coursier Cs. La hauteur de la gouttière Gt' du coursier Cs est au moins aussi grande que la profondeur d'un auget 100, pour contenir le flux d'eau dans la machine hydraulique Mh. Sur cette Fig. 5, la pente intérieure de la gouttière Gt' est constante.

Dans la pratique, le chenal Ch ainsi que le coursier Cs peuvent former un ensemble mono corps fabriqué, par exemple, par le coulage de béton dans un coffrage.

Dans un exemple de construction avantageux, la largeur de l'auget est de 1 mètre. Sa capacité avoisine les 70 à 80 litres, mais pouvant atteindre 180 à 200 litres dans une configuration pour chutes d'eau à relativement grand débit.

Le diamètre de la roue à augets Rg peut atteindre les 20 mètres.

La longueur du chenal Ch peut atteindre 15 mètres.

La pente du chenal Ch peut atteindre les 45 °.

La pente du coursier Cs peut atteindre les 45 °.

La machine hydraulique Mh est dimensionnée pour accepter un débit d'eau pouvant atteindre 1000 litres par seconde.

Le fonctionnement de la machine hydraulique Mh va maintenant être décrit. La vanne de barrage est ouverte et un flux d'eau Fx s'écoule en s'accélérant dans le chenal Ch.

Les augets 100 ainsi que les aubes 200 correspondantes et qui sont disposés dans le coursier Cs sont exposés au flux d'eau Fx, ce qui entraîne à rotation, l'arbre Br.

Examinons le mouvement des aubes 200 au regard de leurs augets 100 respectifs. Dans la partie haute de la roue à augets Rg, chaque aube 200 demeure basculée par gravité dans une position de rabattement où son bord avant Bv est maintenu en contact par gravité avec une butée Bt. Cette butée est constituée, sur cette Fig. 5, d'une cale C fixée le long du bord frontal Bf de l'auget 100 suivant et qui est disposé en aval, en considérant le sens de rotation R de la roue à augets Rg. Tous les augets 100 sont respectivement pourvus de cales C.

Pendant leur rotation autour de l'arbre Br, le centre de gravité de chaque aube 200 traverse un plan vertical sécant à son articulation N, ce qui conduit l'aube 200 à basculer dans un mouvement d'ouverture indiqué par la flèche V vers sa position d'ouverture maximum. Une butée Bt est montée sur chaque auget 100 ou sur chaque aube 200 pour limiter l'amplitude du mouvement d'ouverture de chaque aube 200 à sa position d'ouverture. Avantageusement, cette butée Bt est la même qui sert à définir la position de rabattement de ladite aube 200. La cale C et la position d'ouverture d'une aube 200 sont visibles clairement sur les Figs. 3 et 4. La cale C présente en section, sur ces Figs. 3 et 4, une géométrie triangulaire. Une position d'ouverture intéressante consiste à positionner la cale C de sorte que le bord avant Bv de l'aube soit pratiquement tangent à un plan coplanaire à l'ouverture du contenant T.

Pendant la rotation de la roue à augets Rg, l'aube 200 d'un auget 100 pénètre dans le coursier Cs, puis est exposée à l'écoulement X du flux d'eau Fx. Un transfert d'énergie s'opère entre le flux d'eau Fx et l'aube 200, puis à l'auget 200. L'aube 200 exerce ainsi en première fonction, un couple moteur dans la roue à augets Rg et qui est exploité par un accessoire relié à son arbre Br. En seconde fonction, l'aube 200 est utilisée pour remplir l'auget 100 auquel elle est associée.

Grâce à l'inclinaison de l'aube 200 par rapport à son auget 100 et grâce à sa géométrie cintrée, le flux d'eau qui frappe l'aube 200 est dirigé de sorte à remplir l'auget 100. La flèche S montre le remplissage de l'auget 100 par son aube associée 200. Le cintrage améliore également l'efficacité de l'aube 200 qui peut ainsi capter une proportion plus grande de l'énergie cinétique du flux d'eau.

Le centre de gravité de l'auget 100 rempli et qui est décalé latéralement d'un plan vertical passant par l'axe de l'arbre Br exerce un couple moteur qui s'additionne au couple moteur fournit par l'aube 200 dans la roue à augets Rg et qui est exploité par l'accessoire.

En poursuivant sa rotation, le bord avant Bv de l'aube 200 s'approche et vient toucher la paroi de fond Pf de la gouttière Gt' constitutive du coursier Cs, l'aube 200 commence alors à se replier et son bord avant Bv vient s'approcher de l'auget suivant et qui est disposé en amont du sens de rotation de la roue à augets Rg. L'aube 200 est toujours exposée au flux d'eau, tant qu'elle n'a pas touché la paroi de fond Pf.

Pendant ce temps, la masse de l'auget rempli fournit encore un travail jusqu'à ce que son centre de gravité traverse le plan vertical passant par l'axe de l'arbre Br.

Pendant la rotation de la roue à augets Rg, plusieurs aubes 200 disposées dans le coursier Cs sont ainsi exposées au flux d'eau Fx pour capter son énergie et fournir un travail et plusieurs augets 100 remplis et disposés dans le coursier Cs fournissent également un travail.

On remarquera que, en référence à la coupe B-B, il subsiste un jeu minimum entre les couronnes Cn encadrant latéralement les augets 100 et les deux parois de flanc Pn1 et Pn2 du coursier Cs ainsi qu'entre les parois latérales des aubes 200 et les deux parois de flanc Pn1 et Pn2 du coursier Cs, pour qu'un maximum d'énergie contenue dans le flux d'eau puisse être capté par la roue à augets Rg.

Pour faciliter la vidange des augets 100 à l'issue de leur passage au point mort bas de leur trajectoire, le coursier Cs est équipé d'un assistant de vidange Av. Celui-ci prend la forme d'un passage Ps réalisé localement dans la paroi de fond Pf du coursier Cs au droit d'un plan passant par l'axe de l'arbre Br. La largeur de ce passage Ps est inférieure à la largeur intérieure de la gouttière Gt' constitutive du coursier Cs, de sorte que le bord avant Bv de l'aube 200 puisse continuer de glisser sur la paroi de fond Pf. L'auget 100 qui passe au-dessus de ce passage Ps est alors vidangé automatiquement.

Pendant la rotation de la roue Rg, plusieurs augets 100 demeurent remplis en même temps. Sur la Fig. 5, six à sept augets 100 sont remplis en circulant dans le coursier Cs.

Lorsque le dernier auget 100 quitte le coursier Cs, l'aube 200 pend sous ledit auget, puis, en remontant, se replie progressivement vers sa position de rabattement.

Le fonctionnement de chaque ensemble aube 100 et auget 100 est automatique et ne nécessite aucun mécanisme de commande additionnel.

La machine hydraulique Mh de l'invention peut être installée dans un bâtiment préalablement construit sur le site naturel d'exploitation. Le bâtiment est préférablement insonorisé pour contenir le bruit émis par la machine hydraulique pendant son fonctionnement. Le bâtiment protège également des intempéries la machine hydraulique Mh.

La machine hydraulique Mh de l'invention étant alimentée par en dessous, il est possible de la dimensionner comme son constructeur le souhaite.

Elle peut être installée sur les sites d'anciens moulins à eau, permettant ainsi de sauvegarder un patrimoine important de notre histoire.

Dans une variante de réalisation présentée sur la Fig. 6, l'installation I comprend deux machines hydrauliques Mh et Mh' montées en série dans le flux d'eau Fx. Celui-ci s'écoule et s'accélère par gravité dans la pente du chenal Ch. Ce chenal Ch est prolongé de deux coursiers Cs et dans lesquels plongent respectivement la partie basse des deux roues à augets Rg constitutives des deux machines hydrauliques Mh et Mh'.

La seconde machine Mh' située à droite sur cette Fig. 6 est installée plus bas que la première, pour que la vitesse de l'écoulement du flux d'eau Fx puisse augmenter, dans une portion intermédiaire du chenal, avant de s'écouler dans le second coursier Cs.

## Revendications

1. Ensemble auget (100) et aube (200), conçu pour équiper la roue à augets (Rg) d'une machine hydraulique (Mh) destinée à être utilisée pour faire fonctionner un accessoire, en utilisant l'écoulement gravitaire d'un flux d'eau (Fx),
l'auget (100) comprenant une paroi concave (Pc) formant un contenant (T) destiné à être rempli au moins partiellement par de l'eau pendant le fonctionnement de ladite machine hydraulique, la paroi concave (Cv) étant délimitée par un bord frontal (Bf) rectiligne destiné à être tourné vers l'extérieur de la roue à augets (Rg),
à chaque auget (100) est associé une aube (200),
ladite aube comprenant une plaque (P) délimitée par un bord arrière (Ba),
ladite aube comprenant une articulation (N) disposée de sorte que le bord arrière (Ba) puisse être pratiquement jointif avec le bord frontal (Bf) de l'auget (100), dans la position d'utilisation de l'ensemble,
**caractérisé en ce que** ladite aube peut, d'une part, être orientée de sorte à pouvoir adopter sous l'effet de la gravité et sans l'adjonction d'un quelconque mécanisme de commande, une position d'ouverture maximum où elle s'expose au flux d'eau (Fx) et d'autre part, servir à remplir au moins partiellement d'eau ledit auget et **en ce qu'**une butée (Bt) est montée sur chaque auget (100) ou sur chaque aube (200) pour limiter l'amplitude du mouvement d'ouverture de chaque aube (200) à sa position d'ouverture maximum et qui sert également à définir la position de rabattement d'une aube (200) de l'auget suivant.

2. Ensemble selon la revendication 1, **caractérisé en ce que** la plaque (P) présente une géométrie cintrée et dont le cintrage est réalisé dans la même direction que celui de la paroi concave (Pc) de l'auget (100), l'aube (200) étant considérée dans sa position d'ouverture maximum.

3. Ensemble selon l'une quelconque des revendications précédentes, **caractérisé en ce que** le périmètre de l'aube (200) est rectangulaire ou carré.

4. Ensemble selon la revendication 2 ou 3, **caractérisé en ce que** la plaque cintrée (P) est renforcée par au moins un raidisseur (Rd) s'opposant à son décintrage.

5. Ensemble selon l'une quelconque des revendications précédentes, **caractérisé en ce que** l'aube (200) est définie par un bord avant (Bv) disposé à l'opposé du bord arrière (Ba) et **en ce que** ledit bord avant (Bv) est renforcé par un rebord conçu pour réduire l'usure par frottement dudit bord avant.

6. Machine hydraulique (Mh) destinée à être utilisée pour faire fonctionner un accessoire, en utilisant l'écoulement gravitaire d'un flux d'eau (Fx), la machine (Mh) étant pourvue d'une roue à augets (Rg) susceptible d'être exposée audit flux d'eau (Fx) pour la faire tourner, **caractérisée en ce que** la roue à augets (Rg) incorpore à sa périphérie une pluralité d'ensembles comprenant respectivement un auget (100) et une aube (200) selon l'une quelconque des revendications 1 à 5.

7. Machine hydraulique (Mh) selon la revendication 6, **caractérisée en ce que** la roue à augets (Rg) comporte un arbre (Br) et **en ce qu'**elle comprend deux couronnes (Cn) ou deux disques disposés parallèlement l'un à l'autre en étant centrés autour de l'axe de l'arbre (Br), les augets (100) étant encadrés latéralement par les deux couronnes (Cn) ou les deux disques.

8. Installation (I) du type comprenant une machine hydraulique (Mh) selon la revendication 7, **caractérisée en ce qu'**elle comprend un coursier (Cs) destiné à canaliser un écoulement gravitaire d'eau, le coursier (Cs) s'étendant par en dessous de la roue à augets (Rg), le coursier (Cs) étant positionné de sorte qu'il puisse contenir une pluralité d'augets (100) et d'aubes (200) associées et **en ce que** la géométrie du coursier (Cs) est dimensionnée pour réceptionner avec un jeu minimum la largeur comprise entre les deux couronnes (Cn) ou les deux disques, pour limiter un écoulement de l'eau en dehors de la zone de passage de la roue à augets (Rg) dans ledit coursier.

9. Installation (I) selon la revendication 8, **caractérisée en ce que** la géométrie du coursier (Cs) est définie par une paroi de fond (Pf) et **en ce que** ladite paroi de fond est renforcée, au moins localement, par l'intermédiaire d'une plaque de frottement (Pt) conçue pour résister à l'usure par abrasion infligée par le passage répété des aubes (200).

## Patentansprüche

1. Anordnung aus Kübel (100) und Schaufel (200), die dazu ausgelegt ist, das Wasserrad (Rg) einer hydraulischen Maschine (Mh) auszustatten, die dazu bestimmt ist, eingesetzt zu werden, um ein Zubehör zu betreiben, indem die Schwerkraftströmung eines Wasserstroms (Fx) genutzt wird,
wobei der Kübel (100) eine konkave Wand (Pc) umfasst, die ein Behältnis (T) bildet, das dazu bestimmt ist, während des Betriebs der hydraulischen Maschine zumindest teilweise mit Wasser gefüllt zu werden, wobei die konkave Wand (Cv) durch eine geradlinige stirnseitige Kante (Bf) begrenzt wird, die dazu bestimmt ist, nach außerhalb des Wasserrads (Rg) gewandt zu sein,
wobei jedem Kübel (100) eine Schaufel (200) zugeordnet ist,
wobei die Schaufel eine Platte (P) umfasst, die durch eine hintere Kante (Ba) begrenzt wird,
wobei die Schaufel ein Gelenk (N) umfasst, das so angeordnet ist, dass die hintere Kante (Ba) in der Verwendungsposition der Anordnung praktisch an die stirnseitige Kante (Bf) des Kübels (100) anstößt, **dadurch gekennzeichnet, dass** die Schaufel zum einen so ausgerichtet sein kann, dass sie unter der Einwirkung der Schwerkraft und ohne Hinzufügen irgendeines Betätigungsmechanismus eine maximal geöffnete Stellung einnehmen kann, in der sie sich dem Wasserstrom (Fx) aussetzt, und zum anderen dazu dienen kann, den Kübel zumindest teilweise mit Wasser zu füllen, und dadurch, dass ein Anschlag (Bt) an jedem Kübel (100) oder an jeder Schaufel (200) angebracht ist, um die Amplitude der Öffnungsbewegung jeder Schaufel (200) in ihrer maximal geöffneten Stellung zu begrenzen, und der auch dazu dient, die Einklappstellung einer Schaufel (200) des folgenden Kübels zu definieren.

2. Anordnung nach Anspruch 1, **dadurch gekennzeichnet, dass** die Platte (P) eine Geometrie aufweist, die gewölbt ist und deren Wölbung in die gleiche Richtung wie die der konkaven Wand (Pc) des Kübels (100) ausgeführt ist, wobei die Schaufel (200) als in ihrer maximal geöffneten Stellung befindlich betrachtet wird.

3. Anordnung nach einem der vorhergehenden Ansprüche, **dadurch gekennzeichnet, dass** der Umfang der Schaufel (200) rechteckig oder quadratisch ist.

4. Anordnung nach Anspruch 2 oder 3, **dadurch gekennzeichnet, dass** die gewölbte Platte (P) durch mindestens eine Aussteifung (Rd) verstärkt wird, die sich ihrer Entwölbung entgegensetzt.

5. Anordnung nach einem der vorhergehenden Ansprüche, **dadurch gekennzeichnet, dass** die Schaufel (200) durch eine vordere Kante (Bv) definiert wird, die entgegengesetzt zur hinteren Kante (Ba) angeordnet ist, und dass die vordere Kante (Bv) durch eine Stoßkante verstärkt wird, die dazu ausgelegt ist, den Verschleiß durch Reibung der vorderen Kante zu verringern.

6. Hydraulische Maschine (Mh), die dazu bestimmt ist, eingesetzt zu werden, um ein Zubehör zu betreiben, indem die Schwerkraftströmung eines Wasserstroms (Fx) genutzt wird, wobei die Maschine (Mh) mit einem Wasserrad (Rg) versehen ist, das dem Wasserstrom (Fx) ausgesetzt werden kann, um es drehen zu lassen, **dadurch gekennzeichnet, dass** das Wasserrad (Rg) an seinem Umfang eine Mehrzahl von Anordnungen beinhaltet, die jeweils einen Kübel (100) und eine Schaufel (200) nach einem der Ansprüche 1 bis 5 umfassen.

7. Hydraulische Maschine (Mh) nach Anspruch 6, **dadurch gekennzeichnet, dass** das Wasserrad (Rg) eine Welle (Br) beinhaltet und dass es zwei Kränze (Cn) oder zwei Scheiben umfasst, die parallel zueinander angeordnet sind und dabei um die Achse der Welle (Br) zentriert sind, wobei die Kübel (100) seitlich von den beiden Kränzen (Cn) oder den beiden Scheiben eingefasst werden.

8. Anlage (I) des Typs, der eine hydraulische Maschine (Mh) nach Anspruch 7 umfasst, **dadurch gekennzeichnet, dass** sie ein Gerinne (Cs) umfasst, das dazu bestimmt ist, die Wasserschwerkraftströmung zu kanalisieren, wobei sich das Gerinne (Cs) unterhalb des Wasserrads (Rg) erstreckt, wobei das Gerinne (Cs) so positioniert ist, dass es eine Mehrzahl von Kübeln (100) und zugeordneten Schaufeln (200) enthalten kann, und dadurch, dass die Geometrie des Gerinnes (Cs) bemessen ist, um die Breite zwischen den beiden Kränzen (Cn) oder den beiden Scheiben mit minimalem Spiel aufzunehmen, um eine Strömung des Wassers außerhalb des Durchlaufbereichs des Wasserrades (Rg) in dem Gerinne zu begrenzen.

9. Anlage (I) nach Anspruch 8, **dadurch gekennzeichnet, dass** die Geometrie des Gerinnes (Cs) durch eine Bodenwand (Pf) definiert wird und dass die Bodenwand zumindest lokal über eine Reibplatte (Pt) verstärkt wird, die dazu ausgelegt ist, dem Verschleiß durch Abrieb, der durch das wiederholte Durchlaufen der Schaufeln (200) bedingt ist, zu widerstehen.

## Claims

1. Bucket (100) and vane (200) assembly, designed to equip the bucket wheel (Rg) of a hydraulic machine (Mh) intended to be used to operate an accessory, using the gravity flow of a stream of water (Fx),
the bucket (100) comprising a concave wall (Pc) forming a container (T) intended to be at least partially filled with water during operation of said hydraulic machine, the concave wall (Cv) being delimited by a rectilinear frontal edge (Bf) intended to face towards the outside of the bucket wheel (Rg),
each bucket (100) having an associated vane (200),
said vane comprising a plate (P) delimited by a rear edge (Ba),
said vane comprising an articulation (N) positioned in such a way that the rear edge (Ba) can be practically contiguous with the frontal edge (Bf) of the bucket (100) in the position of use of the assembly,
**characterized in that** said vane may, on the one hand, be oriented in such a way as to be able, under the effect of gravity and without the addition of any control mechanism whatsoever, to adopt a maximally open position in which it is exposed to the stream of water (Fx) and, on the other hand, be used to at least partially fill said bucket with water, and **in that** an end stop (Bt) is mounted on each bucket (100) or on each vane (200) to limit the amplitude of the opening movement of each vane (200) to its maximally open position, and which also serves to define the folded-in position of a vane (200) of the next bucket.

2. Assembly according to Claim 1, **characterized in that** the plate (P) has a curved geometry the curvature of which is in the same direction as that of the concave wall (Pc) of the bucket (100), the vane (200) being considered in its maximally open position.

3. Assembly according to either one of the preceding claims, **characterized in that** the perimeter of the vane (200) is rectangular or square.

4. Assembly according to Claim 2 or 3, **characterized in that** the curved plate (P) is reinforced by at least one stiffener (Rd) that serves to oppose it losing its curvature.

5. Assembly according to any one of the preceding claims, **characterized in that** the vane (200) is defined by a front edge (Bv) positioned on the opposite side to the rear edge (Ba), and **in that** said front edge (Bv) is reinforced by a lip designed to reduce frictional wearing of said front edge.

6. Hydraulic machine (Mh) intended to be used to operate an accessory by using the gravity flow of a stream of water (Fx), the machine (Mh) being provided with a bucket wheel (Rg) capable of being exposed to said stream of water (Fx) in order to turn it, **characterized in that** the bucket wheel (Rg) incorporates at its periphery a plurality of assemblies respectively comprising a bucket (100) and a vane (200) according to any one of Claims 1 to 5.

7. Hydraulic machine (Mh) according to Claim 6, **characterized in that** the bucket wheel (Rg) comprises a shaft (Br) and **in that** it comprises two rings (Cn) or two discs positioned parallel to one another and centered about the axis of the shaft (Br), the buckets (100) being laterally flanked by the two rings (Cn) or the two discs.

8. Installation (I) of the type comprising a hydraulic machine (Mh) according to Claim 7, **characterized in that** it comprises a race (Cs) intended to channel a gravity flow of water, the race (Cs) extending under the bucket wheel (Rg), the race (Cs) being positioned in such a way that it is able to contain a plurality of associated buckets (100) and vanes (200), and **in that** the geometry of the race (Cs) is dimensioned to accept, with minimum clearance, the width comprised between the two rings (Cn) or the two discs, so as to limit the flow of water outside of the zone in which the bucket wheel (Rg) passes through said race.

9. Installation (I) according to Claim 8, **characterized in that** the geometry of the race (Cs) is defined by a bottom wall (Pf) and **in that** said bottom wall is reinforced, at least locally, by a rubbing plate (Pt) designed to resist the abrasive wearing inflicted by the repeated passage of the vanes (200).
